(19) Europäisches Patentamt
European Patent Office
Office européen des brevets

(11) Veröffentlichungsnummer: **0 044 424**
**B2**

(12) **NEUE EUROPÄISCHE PATENTSCHRIFT**

(45) Veröffentlichungstag der neuen Patentschrift: **24.08.88**

(51) Int. Cl.⁴: **C 08 L 77/00**, C 08 K 5/34

(21) Anmeldenummer: **81104777.8**

(22) Anmeldetag: **22.06.81**

(54) **Flammfeste Polyamidformmassen und entsprechende Formkörper.**

(30) Priorität: **21.07.80 DE 3027617**

(43) Veröffentlichungstag der Anmeldung:
**27.01.82 Patentblatt 82/4**

(45) Bekanntmachung des Hinweises auf die Patenterteilung:
**25.04.84 Patentblatt 84/17**

(45) Bekanntmachung des Hinweises auf die Entscheidung über den Einspruch:
**24.08.88 Patentblatt 88/34**

(84) Benannte Vertragsstaaten:
**CH DE FR GB IT LI NL SE**

(56) Entgegenhaltungen:
**EP - A - 0 017 925**
**DE - A - 1 694 254**
**DE - A - 2 730 503**
**DE - A - 2 740 092**
**JP - A - 66 000 329**
**US - A - 4 001 177**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Rottmaier, Ludwig, Bergstrasse 85, D-5068 Odenthal (DE)**
Erfinder: **Merten, Rudolf, Dr., Berta-von-Suttner-Strasse 55, D-5090 Leverkusen (DE)**
Erfinder: **Siebourg, Wolfgang, Dr., z.ZT. Mobay Chemical Co. Penn Lincoln Parkway West, Pittsburgh, PA 15205 (US)**
Erfinder: **Lachmann, Burkhard, Dr., Lettweg 3, D-4005 Meerbusch 1 (DE)**



ACTORUM AG

**Beschreibung**

Es wurden bereits verschiedene Verfahren vorgeschlagen, um thermoplastische Kunststoffe flammwidrig und feuerhemmend auszurüsten. Das am häufigsten angewandte Verfahren besteht in der Zumischung eines flammwidrigmachenden und feuerhemmenden Mittels zum Harz. Zu den bekannten feuerhemmenden Mitteln gehören halogenhaltige Verbindungen und stickstoffhaltige Verbindungen.

Als hochwirksame Brandschutzmittel für Polyamidformmassen werden heute im technischen Massstab Halogenverbindungen zusammen mit synergistisch wirkenden Metallverbindungen oder pulverisierter roter Phosphor eingesetzt. Diese Brandschutzmittel und ihre Verwendung sind beispielsweise im US-Patent 3 418 267, in der DAS 1 69 494, der DE-OS 2 544 219 und der DAS 1 931 387 beschrieben.

Halogenverbindungen haben den Nachteil, dass sie die Kriechstromfestigkeit der PA-Formmassen senken und im Brandfall Halogenwasserstoff abspalten, der in der Umgebung des Brandherdes erhebliche Korrosionen verursachen kann. Halogenverbindungen enthaltende Formmassen spalten in geringem Masse auch bereits bei den erforderlichen hohen Verarbeitungsmaschinen Halogenwasserstoff ab, der die Maschine schädigen kann.

Der pulverförmige rote Phosphor lässt sich nur schwierig handhaben, da er in Gegenwart von Luft bei Kontakt mit heissen Metallflächen zu Staubexplosionen neigt.

Nachteilig ist weiterhin die leichte Entwicklung von giftigen Phosphor-Wasserstoff-Verbindungen, die bei den hohen Verarbeitungstemperaturen der Formmassen durch Reaktion des Phosphors mit Polyamiden stattfindet. Zahlreiche zusätzliche Verfahrensschritte sind – wie sie beispielsweise in den DAS 2 308 104, 2 625 673 und 2 625 691 beschrieben sind – empfohlen worden, um diese Entwicklung möglichst einzudämmen.

Schliesslich erschwert die rote Eigenfarbe des Phosphors die Einstellung heller Farbtöne bei den Formmassen. Die zur Überdeckung der roten Farbe notwendige Menge an Weisspigmenten führt zur Verschlechterung der mechanischen Eigenschaften.

Zur Flammfestausrüstung von Polyamidharzmassen wurde ferner der Zusatz von Melamin vorgeschlagen (DAS 1 694 254) sowie der Zusatz von Cyanursäure (US-PS 3 980 618) sowie der Zusatz sowohl von Melamin als auch von Cyanursäure (US-PS 4 001 177).

Im Falle des Zusatzes von Melamin erzielt man eine befriedigende Flammfestausrüstung, aber das Melamin kann unter den Formbedingungen sublimieren und sich auf der Form abscheiden. Diese Erscheinung wird als «Ausplattung» bezeichnet. Hierbei kommt es zu unerwünschtem Ablösen oder zu einer Verfleckung des Formkörpers.

Daher ist manchmal das Aussehen der Produkte nicht zufriedenstellend.

Im Falle der Zugabe von Cyanursäure werden die mechanischen Eigenschaften des Formkörpers schon bei geringen Mengen an Flammschutzmittel beeinträchtigt und erhebliche Ausblüherscheinungen beobachtet. Im Falle der Zugabe von Cyanursäure und Melamin ist es erforderlich, mindestens 10 Gew.-Teile auf 100 Gew.-Teile Polyamidharz einzusetzen, um eine befriedigende Flammfestausrüstung zu erzielen. Die «Ausplattung» und die «Ausblühung» sind dabei ebenfalls nicht gering.

Aus der DE-A-2 730 503 ist es bekannt, Kunststoffen, insbesondere Polyolefinen, Styrolpolymerisaten und Polyurethanen, Barbitursäurederivate als Stabilisatoren gegen die schädliche Einwirkung von Sauerstoff, Wärme und Licht einzuarbeiten. Weitere Stabilisatorwirkungen werden nicht genannt.

Um so überraschender ist es daher, dass es mit Hilfe des erfindungsgemässen Flammschutzmittels gelingt, eine Polyamidharzmasse zu schaffen, die zufriedenstellende Flammfestcharakteristika zeigt, sich zur Herstellung von Formkörpern eignet und insbesondere es ermöglicht, flammgeschützte Polyamidformmassen in hellen Farben bereitzustellen, da alle Komponenten fast farblos bzw. weiss sind.

Gegenstand der vorliegenden Erfindung sind daher selbstverlöschende, thermoplastische Polyamidformmassen, die dadurch gekennzeichnet sind, dass sie 0,1–20 Gew.-%, bezogen auf die Gesamtformmassen, Reaktionsprodukte der Barbitursäuren mit Melamin oder Melaminderivaten, und gegebenenfalls Cu-Verbindungen und/oder Alkalimetallhalogenide als Flammschutzmittelkombination und gegebenenfalls bis zu 60 Gew.-%, bezogen auf die Gesamtformmassen, Verstärkungs- und/oder Füllstoffe und gegebenenfalls weitere übliche Hilfs- und/oder Zusatzstoffe enthalten.

Als thermoplastische Polyamidharze können Polyamide verwendet werden, die durch Polymerisation eines Lactams mit wenigstens 5 Ringgliedern oder einer entsprechenden ω-Aminocarbonsäure wie z.B. ε-Carolactam, Aminocapronsäure, Enatholactam, 7-Aminohexansäure, 9-Aminononansäure, 11-Aminoundecansäure, α-Pyrrolidon und Piperidon erhalten werden: ausserdem Polyamidharze, die durch Polykondensation von aliphatischen Diaminen wie Hexamethylendiamin, 2,2,4-, 2,4,4-Trimethylhexamethylendiamin, Isophorondiamin, 1,3-, 1,4-Bisaminocyclohexan, Bisamino-cyclohexyl-alkane, Xylylendiamin und aliphatischen oder aromatischen Dicarbonsäuren wie Adipinsäure, Sebacinsäure, Azelaeinsäure, Dodecandisäure, Glutarsäure, Cyclohexandicarbonsäure, Isophthalsäure, Terephthalsäure erhalten werden.

Ausserdem kommen Polyamide in Betracht, die aus den genannten aliphatischen Dicarbonsäuren und aromatischen Diaminen wie z.B. 1,3- und 1,4-Diaminobenzol hergestellt werden, sowie Polyamid-Gemische und Copolyamide aus allen genannten Komponenten, soweit aliphatische oder teilaliphatische Polyamide entstehen. Besonders bevorzugt sind Polyamid-6 und Polyamid-6.6.

Das Polyamidharz kann noch weitere Harze enthalten, z.B. Polyester, Polyolefine, Polytetrafluorethylen, ABS, AS oder Ethylen-Vinylacetat-Copolymere.

Erfindungsgemäss einzusetzende Reaktionsprodukte der Barbitursäuren sind daraus hergestellte Mannichbasen der allgemeinen Formel I

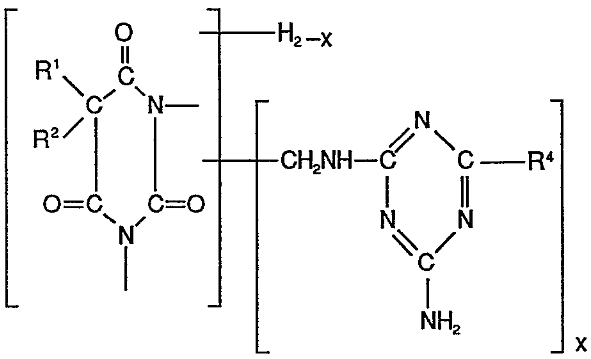

(I)

worin
$R^1$ und $R^2$ gleich oder verschieden, unabhängig voneinander für einen aliphatischen $C_1$–$C_{10}$-, cycloaliphatischen $C_4$–$C_{10}$-, araliphatischen $C_7$–$C_{12}$ oder aromatischen $C_6$–$C_{10}$-Rest,
$R^4$ für Wasserstoff, eine Aminogruppe, einen gegebenenfalls mit Halogen substituierten aliphatischen $C_1$–$C_{20}$-, vorzugsweise $C_1$–$C_{10}$-, cycloaliphatischen $C_4$–$C_{17}$-, vorzugsweise $C_5$–$C_{10}$-, araliphatischen $C_7$–$C_{17}$-, vorzugsweise $C_7$–$C_{10}$-, oder aromatischen $C_6$–$C_{15}$-, vorzugsweise $C_5$–$C_{10}$-Rest und x für 1 oder 2 stehen.

Weitere erfindungsgemäss einzusetzende Reaktionsprodukte der Barbitursäuren sind vorzugsweise daraus hergestellte Mannichbasen der allgemeinen Formel II

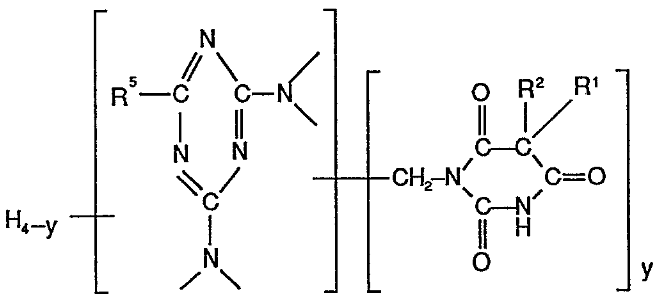

(II)

worin
$R^1$ und $R^2$ die oben angegebene Bedeutung hat.
$R^5$ für Wasserstoff, einen gegebenenfalls mit Halogen substituierten aliphatischen $C_1$–$C_{20}$-, vorzugsweise $C_1$–$C_{10}$-, cycloaliphatischen $C_4$–$C_{17}$-, vorzugsweise $C_5$–$C_{10}$-, araliphatischen $C_7$–$C_{17}$-, vorzugsweise $C_7$–$C_{10}$-, aromatischen $C_6$–$C_{15}$-, vorzugsweise $C_6$–$C_{10}$-Rest oder einen Rest der allgemeinen Formel IIa

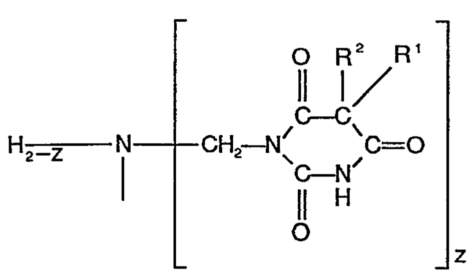

(IIa)

y für 1 bis 4 und
z für 1 bis 2 stehen.

Insbesondere finden Verwendung Mannichkondensate aus Barbitursäuren, Formaldehyd und Melamin im Verhältnis 1:1:1 bis 1:2:2.

Die erfindungsgemäss einzusetzenden, aus Barbitursäuren hergestellten Mannichkondensate der allgemeinen Formeln I und II werden erhalten, indem man Barbitursäuren mit Formaldehyd, bevorzugt als wässrige Lösung, und den entsprechenden Triazinderivaten, gegebenenfalls in Gegenwart von geeigneten Katalysatoren, bei Temperaturen von 10 bis 180 °C, gegebenenfalls unter erhöhtem Druck, umsetzt.

Die Reaktionsprodukte der Barbitursäuren werden in einer Menge von 1 bis 20 Gew.-% vorzugsweise 3 bis 15 Gew.-% zu dem Polyamidharz zugegeben. Selbstverständlich können auch Mischungen aus Barbitursäuren und den Reaktionsprodukten der Barbitursäuren verwendet werden. Auch ist es natürlich möglich zu den erfindungsgemässen Flammschutzmitteln noch weitere Flammschutzmittel z.B. Halogenverbindungen oder roten Phosphor, zuzusetzen.

Als Verstärkungs- und Füllstoffe können in den erfindungsgemässen Polyamidformmassen bis zu 60 Gew.-% enthalten sein. Dazu sind folgende

zu nennen: Glasfasern, Kohlefasern, Asbestfasern, Glaskugeln, Talkum, Glimmer, Wollastonit, Microvit, Kreide, Siliziumdioxid, Graphit, Gips und andere übliche Zusatzstoffe wie Pigmente und Farbstoffe, so z.B. Cadmiumsulfid, Phthalocyanine, Titandioxid.

Als weitere Flammschutzmittel können den erfindungsgemässen Polyamidformmassen Kupferverbindungen oder ein Gemisch aus einer Kupferverbindung und einem Alkalimetallhalogenid in Mengen von 0,001 bis 1 Gew.-% zugesetzt werden.

Geeignete Kupferverbindungen umfassen anorganische und organische Kupfersalze.

Beispielhaft seien erwähnt: Kupfer-I-chlorid, Kupfer-II-sulfat, Kupfer-I-jodid, Kupfer-II-phosphat, Kupfer-II-acetat, Kupfer-II-stearat, Kupfer-II-benzoat und Kupfer-Chelat-Verbindungen.

Geeignete Alkalimetallhalogenide umfassen Kaliumjodid, Kaliumbromid, Natriumchlorid, Natriumbromid.

Als Hilfs- und Zusatzstoffe können zu den erfindungsgemässen Polyamidharzmassen aromatische und/oder höhere aliphatische Carbonsäuren sowie deren Alkalimetall- oder Erdalkalimetallsalze, wie z.B. Natriumstearat, Calziumstearat, Isophthalsäure, Terephthalsäure in Mengen von 0,1 bis 1 Gew.-% eingearbeitet werden.

Ferner ist es möglich, beliebige, bekannte Antistatikmittel wie leitfähigen Russ oder quaternäre Ammoniumsalze zuzusetzen.

Die Zusatzstoffe können dem Polyamidharz gemäss verschiedensten bekannten Verfahren zugemischt werden, und zwar vorzugsweise vor der Formgebung. Das einfachste Verfahren besteht darin, die Zusatzstoffe dem Polyamidharz trocken zuzumischen. Die trocken vermischte Masse kann sodann zur Herstellung von Granulaten aus der Schmelze extrudiert werden, wobei das Zumischen der Zusatzstoffe auch über bekannte Dosiervorrichtungen zu der plastifizierten Polyamid-Harzmasse im Extruder erfolgen kann. Es ist ferner möglich, zunächst Muttergranulate herzustellen, indem man grosse Mengen der Zusatzstoffe dem Polyamidharz zumischt, um dann diese Muttergranulate mit dem Polyamidharz zu vermischen.

Die Formkörper können durch Formen der Masse oder der Granulate mit Hilfe verschiedener Formmaschinen, insbesondere Spritzgussmaschinen, Extrudiermaschinen, Pressmaschinen oder dergleichen, hergestellt werden. Die Einarbeitung der Zusatzstoffe kann auch mit Hilfe der Formmaschine geschehen.

Die zur Einarbeitung der Zusatzstoffe erforderlichen Temperaturen werden im wesentlichen durch die Schmelztemperatur des einzusetzenden Polyamids bestimmt. Üblicherweise sollte die Verarbeitungstemperatur mindestens 10°C jedoch nicht mehr als 30°C über der Erweichungstemperatur des Polyamids liegen. Sie liegt z.B. für Polyamid-6,6 bei höchstens 270°C, während für Polyamid-6 Temperaturen von höchstens 250°C ausreichend sind.

Die Polyamidharzmassen der vorliegenden Erfindung zeigen eine ausgezeichnete Flammfestigkeit bei ausgezeichneten mechanischen Eigenschaften und ausgezeichneter Formbarkeit und Verpressbarkeit, die ausserdem weder zu Ausplattungen noch zu Ausblühungen führt. Die Polyamidharzmassen sind in hellen Farben zugänglich.

In den nachfolgenden Beispielen sind die Prozente Gewichtsprozente und Teile Gewichtsteile.

Beispiele

A) Herstellung einer Mannichbase aus Melamin, Formaldehyd und Barbitursäure

1,02 kg Barbitursäure werden unter Rühren zu 2,46 kg einer 37%igen wässrigen Formaldehydlösung, die mit Natronlauge auf pH 9 eingestellt wurde, portionsweise bei <50°C zugegeben. Die Reaktion ist exotherm und kann durch Kühlen mit Eiswasser leicht gesteuert werden. Dann wird eine Stunde bei 50°C gerührt, wobei eine klare Lösung aus hauptsächlich Dimethylolbarbitursäure entsteht. Die Dimethylolverbindung wird mit 90 l Wasser und 3,78 kg Melamin versetzt und auf leichten Rückfluss aufgeheizt. Zur Vervollständigung der Reaktion wird 3 Stunden bei leichtem Rückfluss gerührt und sodann heiss abgesaugt und mit heissem Wasser gewaschen. Nach dem Trocknen bei 100°C in einem Umlufttrockenschrank werden 5,7 kg Mannichkondensat erhalten, dessen Struktur mittels IR-Spektrum und der Elementaranalyse bestätigt wird.

Berechnet für $C_{12}H_{16}N_{14}O_3$:

C 35,6 H 3,96 N 48,5%;

Gefunden:

C 35,8 H 4,0 N 48,3

Beispiel 1

Die Einarbeitung der erfindungsgemässen Flammschutzmittel in die Polyamide erfolgte, gegebenenfalls gemeinsam mit Glasfasern, auf einem Doppelwellenextruder ZSK 53 der Firma Werner & Pfleiderer unter den für Polyamide üblichen Bedingungen. Der abgezogene Strang wird gekühlt, granuliert und getrocknet. Anschliessend wird das Granulat auf einer Spritzgiessmaschine A 270 der Firma Arburg zu Probekörpern der Abmessung 127 × 12,7 × 1,6 mm gespritzt.

Diese Probekörper werden 24 Stunden bei 23°C und 50% rel. Luftfeuchte gelagert und anschliessend der Prüfung gemäss Underwriter's Laboratories (UL) Subject 94, «Vertical Burning Test for Classifying Materials», unterzogen.

In Tabelle 1 sind die Zusammensetzungen der Prüfkörper, ihre Klassifizierung nach UL-Subject 94 sowie die Nachbrennzeiten aus 10 Beflammungen aufgeführt, um den verbesserten Brandschutzeffekt zu verdeutlichen.

Bei allen Prüfkörpern konnten während oder nach dem Spritzvorgang, auch über einen längeren Zeitraum, keinerlei Ausplattungserscheinungen festgestellt werden. Nach einer Lagerung von 7 Tagen bei 70°C im Trockenschrank behielten alle Prüfkörper ihren Oberflächenglanz.

Tabelle

| Versuchs-Nr. | Polyamid | Gew.-%. in der Mischung | Flammschutzmittel in Gew.-% | Sonstige Zusätze | UL Subj. 94 127 × 12,7 × 1,6 (mm) | Nachbrennzeit sec. |
|---|---|---|---|---|---|---|
| 1 | PA 6 η*) rel. 2,96 | 100 | – | – | V 2 | 43 |
| 2 | wie 1 | 90 | 10% Beispiel A | – | VO | 10 |

*) relative Viskosität gemessen an einer Lösung aus 1 g Polyamid in 100 ml m-Kresol bei 25°C.

**Patentansprüche**

1. Selbstverlöschende, thermoplastische Polyamidformmassen, die gegebenenfalls bis zu 60 Gew.-%, bezogen auf die Gesamtmasse, Verstärkungs- und/oder Füllstoffe und gegebenenfalls weitere übliche Hilfs- oder Zusatzstoffe aufweisen, dadurch gekennzeichnet, dass sie 1–20 Gew.-%, bezogen auf die Gesamtmasse Reaktionsprodukte der Barbitursäuren und gegebenenfalls Kupferverbindungen und/oder Alkalimetallhalogenide als Flammschutzmittelkombination enthalten, wobei als Reaktionsprodukte der Barbitursäuren.

a) Mannichbasen der allgemeinen Formel I

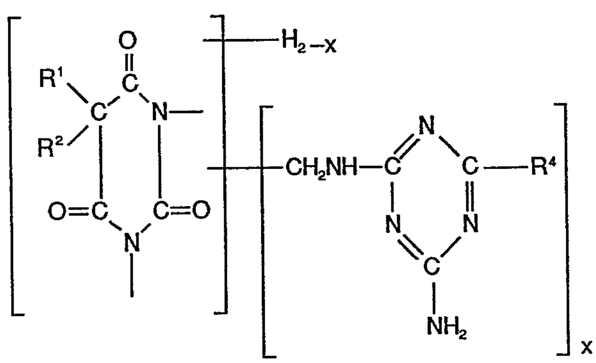

(I)

worin
$R^1$ und $R^2$ gleich oder verschieden, unabhängig voneinander für einen aliphatischen $C_1$–$C_{10}$-, cycloaliphatischen $C_4$–$C_{10}$-, araliphatischen $C_7$–$C_{12}$- oder aromatischen $C_6$–$C_{10}$-Rest,
$R^4$ für Wasserstoff, eine Aminogruppe, einen gegebenenfalls mit Halogen substituierten aliphatischen $C_1$–$C_{20}$-, cyclophatischen $C_4$–$C_{17}$-, araliphatischen $C_7$–$C_{17}$- oder aromatischen $C_6$–$C_{15}$-Rest und
x für 1 oder 2 stehen, oder

b) Mannichbasen der allgemeinen Formel II

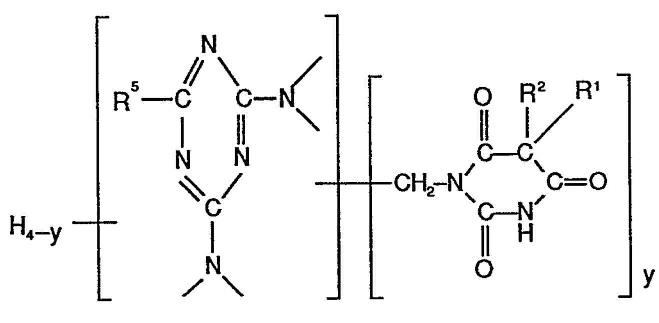

(II)

worin
$R^1$ und $R^2$ die oben angegebene Bedeutung hat,
$R^5$ für Wasserstoff, einen gegebenenfalls mit Halogen substituierten, aliphatischen $C_1$–$C_{20}$-, cycloaliphatischen $C_4$–$C_{17}$-, araliphatischen $C_7$–$C_{17}$-, aromatischen $C_6$–$C_{15}$-Rest oder einen Rest der allgemeinen Formel IIa.

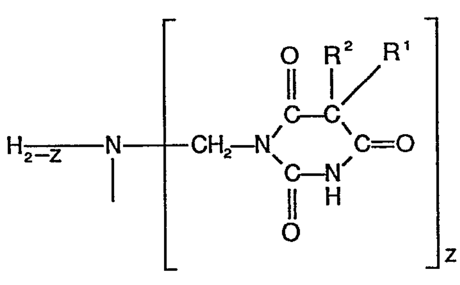

(IIa)

y für 1 bis 4 und

z für 1 bis 2 stehen, oder

c) Mannichkondensate aus Barbitursäure, Formaldehyd und Melamin im Verhältnis 1:1:1 bis 1:2:2 verwendet werden.

2. Selbstverlöschende, thermoplastische Polyamidformmassen nach Anspruch 1, dadurch gekennzeichnet, dass in der allgemeinen Formel I $R^4$ eine $NH_2$-Gruppe bedeutet.

3. Selbstverlöschende, thermoplastische Polyamidformmassen nach Anspruch 1, dadurch gekennzeichnet, dass sie Reaktionsprodukte der Barbitursäuren in Mengen von 3–15 Gew.-% enthalten.

4. Formkörper aus Polyamidformmassen nach Ansprüchen 1 bis 3.

**Revendications**

1. Matières à mouler thermoplastiques en polyamide auto-extinguibles, qui présentent éventuellement jusqu'à 60% en poids, par rapport à la matière totale, d'agents de renforcement et/ou charges et le cas échéant d'autres adjuvants ou additifs, caractérisées en ce qu'elles contiennent 1 à 20% en poids, par rapport à la matière totale, de produits de réaction des acides barbituriques et le cas échéant de composés de cuivre et/ou d'halogénures de métaux alcalins comme association d'agents retardateurs de flamme, où les produits de réaction des acides barbituriques sont

a) barbiturique des bases de Mannich de formule générale I

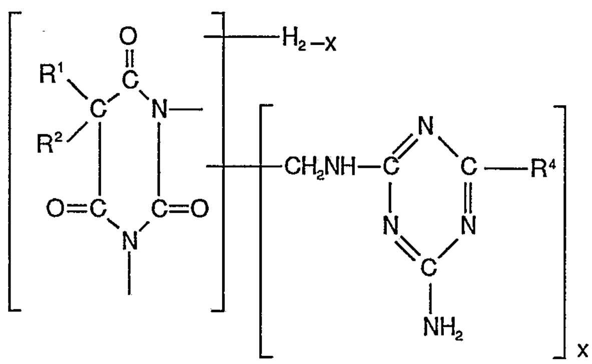

(I)

dans laquelle

$R^1$ et $R^2$ sont égaux ou différents et représent, indépendamment l'un de l'autre, une reste aliphatique en $C_1$ à $C_{10}$, cycloaliphatique en $C_4$ à $C_{10}$, araliphatique en $C_7$ à $C_{12}$ ou aromàtique en $C_6$ à $C_{10}$,

$R^4$ désigne l'hydrogène, un groupe amino, un reste aliphatique en $C_1$ à $C_{20}$, cycloaliphatique en $C_4$ à $C_{17}$, araliphatique en $C_7$ à $C_{17}$ ou aromatique en $C_6$ à $C_{15}$ éventuellement substitué avec un halogéne et

x est égal à 1 ou 2.

b) des bases de Mannich de formule générale II

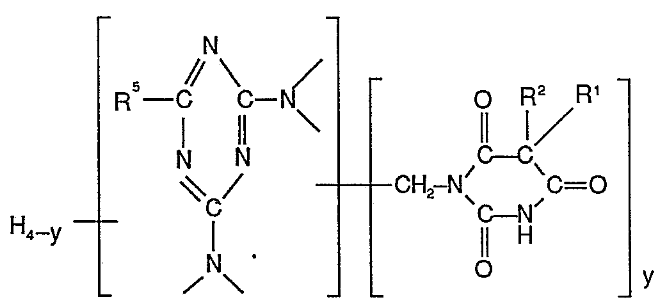

(II)

dans laquelle

$R^1$ et $R^2$ ont la définition indiquée dans la revendication 2,

$R^5$ désigne l'hydrogène, un reste aliphatique en $C_1$ à $C_{20}$, cycloaliphatique en $C_4$ à $C_{17}$, araliphatique en $C_7$ à $C_{17}$, aromatique en $C_6$ à $C_{15}$ éventuellement substitué avec un halogène ou un reste de formule générale IIa

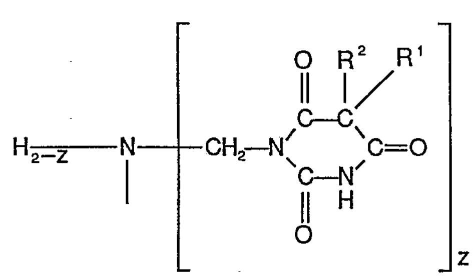

(IIa)

dans laquelle
y a une valeur de 1 à 4 et
z a une valeur de 1 à 2, ou

c) des produits de condensation de Mannich més à partir d'acide barbiturique, de formaldéhyde et de mélamine dans les proportions de 1:1:1 à 1:2:2.

2. Matières à mouler thermoplastiques en polyamide auto-extinguibles suivant la revendication 1 caractérisées en ce que dans la formule générale (I), $R^4$ désigne un groupe $NH_2$.

3. Matières à mouler thermoplastiques en polyamide auto-extinguibles suivant la revendication 1, caractérisées en ce quelles contiennent 3-15% en poids de produits de réaction des acides barbituriques.

4. Pièces moulées formées à partir de matières à mouler en polyamide suivant les revendications 1 à 3.

**Claims**

1. Self-extinguishing thermoplastic polyamide moulding compositions which optionally contain up to 60% by weight, based on the total composition, of reinforcing materials and/or fillers and optionally other conventional auxiliaries or additives, characterised in that they contain 1-20% by weight, based on the total composition, of reaction products of barbituric acids and optionally copper compounds and/or alkali metal halides as a combination of flame-proofing agents, where the reaction products of barbituric acid used are

a) Mannich bases of the general formula I

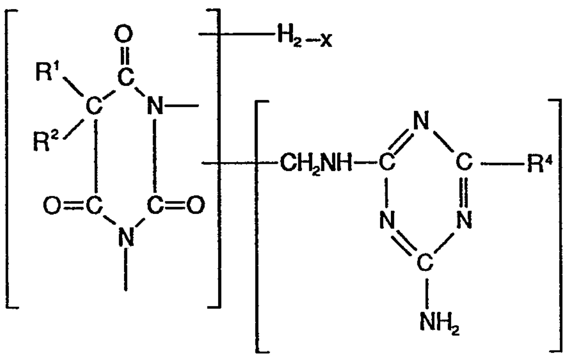

(I)

wherein
$R^1$ and $R^2$, which are identical or different, represent, independently of one another, an aliphatic $C_1$–$C_{10}$-, cycloaliphatic $C_4$–$C_{10}$-, araliphatic $C_7$–$C_{12}$-, or aromatic $C_6$–$C_{10}$ radical,
$R^4$ represents hydrogen, an amino group or an optionally halogen-substituted aliphatic $C_1$–$C_{20}$, cycloaliphatic $C_4$–$C_{17}$, araliphatic $C_7$–$C_{17}$ or aromatic $C_6$–$C_{15}$ radical and
x represents 1 or 2.

b) Mannich bases of the general formula II

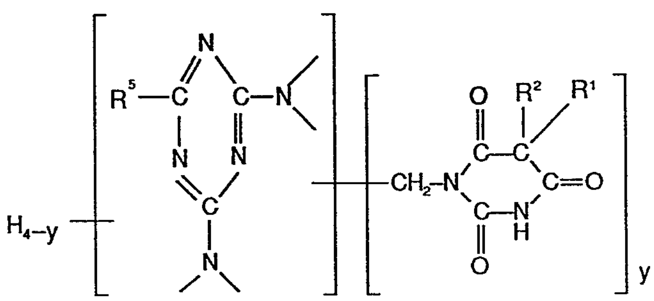

(II)

wherein
$R^1$ and $R^2$ has the meaning indicated above
$R^5$ represents hydrogen, or an optionally halogen-substituted aliphatic $C_1$–$C_{20}$, cycloaliphatic $C_4$–$C_{17}$, araliphatic $C_7$–$C_{17}$, or aromatic $C_6$–$C_{15}$ radical or a radical of the general formula IIa

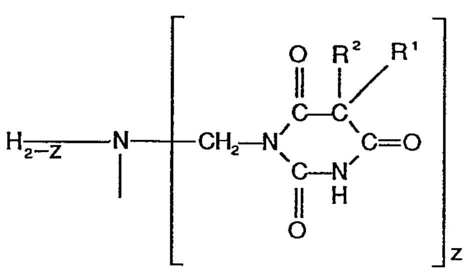

(IIa)

y represents 1 to 4,
z represents 1 to 2, or

c) Manich condensates of barbituric acid, formaldehyde and melamine in a ratio of 1:1:1 to 1:2:2.

2. Self-extinguishing thermoplastic polyamide moulding compositions according to Claim 1, characterized in that in the general formula (I) $R^4$ denotes a $NH_2$ group.

3. Self-extinguishing thermoplastic polyamide moulding compositions according to Claim 1, characterized in that the reaction products of barbituric acids are contained in the polyamide moulding compositions in quantities of 3–15% by weight.

4. Moulded articles of polyamide compositions according to Claims 1–3.